# EUROPEAN PATENT APPLICATION

(11) **EP 4 464 823 A1**
(43) Date of publication of application: **20.11.2024**
(21) Application number: 24176465.3
(22) Date of filing: 16.05.2024
(51) Int. Cl.: C25B 15/00, C22B 1/00, C22B 7/00, C22B 11/00, C25B 9/23, C25B 11/097

(54) **ELECTROLYZER STACK AND MEMBRANE ELECTRODE ASSEMBLY DISASSEMBLY FOR COMPONENT SEPARATION AND RECYCLING**

(30) Priority: 16.05.2023 US 202363502579 P
(71) Applicant: Plug Power, Inc., Latham, NY 12110 (US); Worcester Polytechnic Institute, Worcester, MA 01609 (US)
(72) Inventor: SWIDER LYONS, Karen, Latham, New York, 12110 (US); YANG, Fan, Latham, New York, 12110 (US); LIU, Zhenyu, Latham, New York, 12110 (US); WANG, Yan, Worcester, Massachusetts 01609 (US); YAO, Zeyi, Worcester, Massachusetts 01609 (US); ZHENG, Yadong, Worcester, Massachusetts 01609 (US); JIN, Wenting, Worcester, Massachusetts 01609 (US)
(74) Representative: Buzzi, Notaro & Antonielli d'Oulx S.p.A.

(57) **Abstract**

The present invention provides a method of electrolyzer recycling, including inserting an electrolyzer in a solution to loosen a bond between a first plate and a membrane electrode assembly and a second plate and the membrane electrode assembly of the electrolyzer, separating the membrane electrode assembly from the first plate and the second plate, acid leaching the membrane electrode assembly to obtain a first precious metal, and dispersing the membrane electrode assembly to obtain a second precious metal.

## Description

### Incorporation by Reference:

This application claims the benefit under 35 U.S.C. § 119(e) of U.S. Provisional Application No. 63/502,579, titled "Electrolyzer and Fuel Cel Stack and Membrane Electrode Assembly Disassembly for Component Separation and Recycling", filed May 16, 2023, the complete disclosure of which is hereby incorporated by reference in its entirety. This application is also related to U.S. Non-Provisional Application No. _, titled **Fuel Cell and Membrane Electrode Assembly Disassembly for Component Separation and Recycling,** filed May 16, 2024, the complete disclosure of which is hereby incorporated by reference in their entirety.

### Field of the Invention:

The present invention relates to electrolyzers. More specifically, but not exclusively, the present invention relates to methods of disassembly and component recycling of electrolyzers.

### Background:

Electrolyzers are key technologies that may contribute toward net zero energy emissions. As a result, nations worldwide are increasing manufacturing of these technologies. As these technologies are scaled, they may need to be recycled because: electrolyzers contain high value precious group metal (PGM) electrocatalysts, such as platinum and iridium that are in limited supply; solid electrolytes in the technologies contain high value perfluorosulfonic acids (PFSAs); and PFSAs are part of a general class of per-fluorinated and poly-fluorinated alkyl substances (PFAS), which are under increasing environmental regulations requiring recycling with no or limited chemical release into the environment. The cost of the PGMs are likely higher in electrolyzers than in fuel cell MEAs, because electrolyzers use iridium. Despite their robustness, the membranes and PGM catalysts may degrade during operation of electrolyzers. For the materials to be recycled and reused in new electrolyzers, the membranes and PGM catalysts may need to be taken back to an increased purity and remanufactured.

A fuel cell membrane electrode assembly may contain approximately 250-µm-thick gas diffusion layers (GDL) with a microporous layer (MPL) and approximately 10-µm-thick anode and cathode catalyst layers (CL) on an approximately 10-µm-thick polymer electrolyte membrane (PEM). The PEM is typically made of PFSAs and often contains cerium and/or manganese. The PEM may also be made primarily of a hydrocarbon membrane or contain predominantly hydrocarbons with some fluorinated sites. The PEM membrane may be supported on a porous membrane which may be made of expanded polytetrafluoroethylene (PTFE). The GDL may contain carbon fiber and PTFE binder. The MPL may contain carbon black and PTFE binder. The catalyst layers may contain platinum (Pt) supported on carbon (C) black, transition alloys and traces of iridium, and/or PFSA and cerium and manganese. A spent MEA may contain sodium, chloride, ammonia, and/or iron. The MEA, PEM, and GDL may be pressed together in the fuel cell and become compacted or sealed together.

Electrolyzer MEAs may have a similar structure to a fuel cell, but the anode electrocatalyst contains either iridium (Ir) black or iridium oxide (IrOₓ) and/or ruthenium (Ru) and platinum (Pt). The electrolyzer MEA anode may contain a porous transport layer (PTL) and catalyst layers. The cathode may contain a catalyst supported on a gas diffusion layer (GDL), often with a microporous layer (MPL). The two parts may be separated by a polymer electrolyte membrane (PEM).. The PEM may be made of perfluorinated sulfonic acid (PFSA), and often contains cerium or manganese. The PEM may be a hydrocarbon membrane or a membrane containing almost all hydrocarbons with few fluorinated sites. The PEM membrane may be supported on a porous membrane, often made of expanded PTFE. The GDL may contain carbon fiber and PTFE binder. The MPL may contain carbon black and PTFE binder. The anode catalyst layer may contain iridium black or a hydrous iridium oxide. The catalyst may also contain ruthenium and/or platinum. The cathode catalyst layer may contain Pt supported on carbon black on the anode and transition alloys and traces of iridium. The catalyst layers may also contain PFSA and cerium and manganese. A spent MEA may contain sodium, calcium, chloride, ammonia, and iron. The bonding between catalyst and membrane in the electrolyzer may be much stronger than the fuel cell.

The anode may be in contact with a PTL made typically from titanium with platinum layers for improved contact. The electrolyzer PEM may be a thicker (approximately 50 microns thick) extruded PFSA and may not have a support. The PTLs may be strongly bonded together as they often withstand a strong backpressure.

To make an electrolyzer stack, the MEAs in electrolyzers may be sealed and compressed between bipolar plates comprising carbon, stainless steel, and/or titanium. The electrolyzer MEA components may be surrounded by frames. The area of an electrolyzer MEA may range up to 1 m², and a stack may contain hundreds of cells compressed between end plates.

Electrolyzer MEAs may be manufactured at approximately 1 per minute. As the industry matures, the MEAs may need to be recycled at the same rate as the MEAs are manufactured (approximately 1 MEA per minute for electrolyzers). The stacks must also be disassembled at the same rate. The disassembly is challenging in part because all the MEA layers may become stuck together during operation.

Thus, a recycling process is needed to disassemble stacks into plates and membrane electrode assemblies, disassemble the MEAs into chemical constituents, such that the chemical constituents can be remanufactured into new components.

### Summary of the Invention:

The present invention provides, in a first aspect, a method of electrolyzer recycling, including inserting an electrolyzer in a solution to loosen a bond between a first plate and a membrane electrode assembly and a second plate and the membrane electrode assembly of the electrolyzer, separating the membrane electrode assembly from the first plate and the second plate, acid leaching the membrane electrode assembly to obtain a first precious metal, and dispersing the membrane electrode assembly to obtain a second precious metal.

The present invention provides, in a second aspect, a method of electrolyzer recycling, including applying a solvent to a first plate, a second plate, and a membrane electrode assembly of an electrolyzer to cause the membrane electrode assembly to absorb the solvent to loosen a bond between the first plate and the membrane electrode assembly and the second plate and the membrane electrode assembly, separating the membrane electrode assembly from the first plate and the second plate.

### Brief Description of the Drawings:

The accompanying drawings, which are incorporated in and constitute a part of the specification, illustrate embodiments of the invention and together with the detailed description herein, serve to explain the principles of the invention. The drawings are only for purposes of illustrated preferred embodiments and are not to be construed as limiting the invention. It is emphasized that specific processes depicted within are not meant to confine the processes to any specific order or necessitate any specific step. Other processes may be added, omitted, or adapted as necessary. Additionally, specific illustrations of parts should not be construed as limiting, as assemblies may have different overall assemblies and may adapt over time. Any mention of a specific compound or condition may also be adapted as described within the detailed description of the invention. In accordance with the standard practice in the industry, various features are not drawn to scale. In fact, the dimensions of the various features may be arbitrarily increased or reduced for clarity of discussion. The foregoing and other objects, features and advantages of the invention are apparent from the following detailed description taken in conjunction with the accompanying drawings in which:
**FIG. 1** is a block diagram of an electrolyzer assembly, in accordance with an aspect of the present disclosure;
**FIG. 2** is a flowchart for a process for recycling an electrolyzer stack, in accordance with an aspect of the present disclosure;
**FIG. 3** is side view of an automated disassembly system for separating the electrolyzer stack of FIG. 2, in accordance with an aspect of the present disclosure;
**FIG. 4** is a flowchart for a sub-process of the acid leaching process of FIG. 2, in accordance with an aspect of the present disclosure;
**FIG. 5** is a table of various conditions of the acid leaching process of FIG. 2, in accordance with an aspect of the present disclosure;
**FIG. 6** is a flowchart for a sub-process of the hydrothermal digestion process of FIG. 2, in accordance with an aspect of the present disclosure; and
**FIG. 7** is a flowchart for a process depicting a closed loop recycling process for electrolyzers, in accordance with an aspect of the present disclosure.

### Detailed Description:

The present invention will be discussed hereinafter in detail in terms of various exemplary embodiments according to the present invention with reference to the accompanying drawings. In the following detailed description, numerous specific details are set forth in order to provide a thorough understanding of the present invention. It will be obvious, however, to those skilled in the art that the present invention may be practiced without these specific details. In other instances, well-known structures are not shown in detail in order to avoid unnecessary obscuring of the present invention.

Thus, all the implementations described below are exemplary implementations provided to enable persons skilled in the art to make or use the embodiments of the disclosure and are not intended to limit the scope of the disclosure, which is defined by the claims. As used herein, the word "exemplary" or "illustrative" means "serving as an example, instance, or illustration." Any implementation described herein as "exemplary" or "illustrative" is not necessarily to be construed as preferred or advantageous over other implementations.

As used herein, "about" or "approximately," when used in connection with a numerical variable, generally refers to the value of the variable and to all values of the variable that are within the experimental error (e.g., within the 95% confidence interval for the mean) or within ± 10% of the indicated value, whichever is greater.

Where a range of values is provided, it is understood that each intervening value, to the tenth of the unit of the lower limit unless the context clearly dictates otherwise, between the upper and lower limit of that range and any other stated or intervening value in that stated range, is encompassed within the present disclosure. The upper and lower limits of these smaller ranges may independently be included in the smaller ranges and are also encompassed within the present disclosure, subject to any specifically excluded limit in the stated range. Where the stated range includes one or both of the limits, ranges excluding either or both of those included limits are also included in the present disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrequited number may be a number, which, in the context in which it is presented, provides the substantial equivalent of the specifically recited number.

Furthermore, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

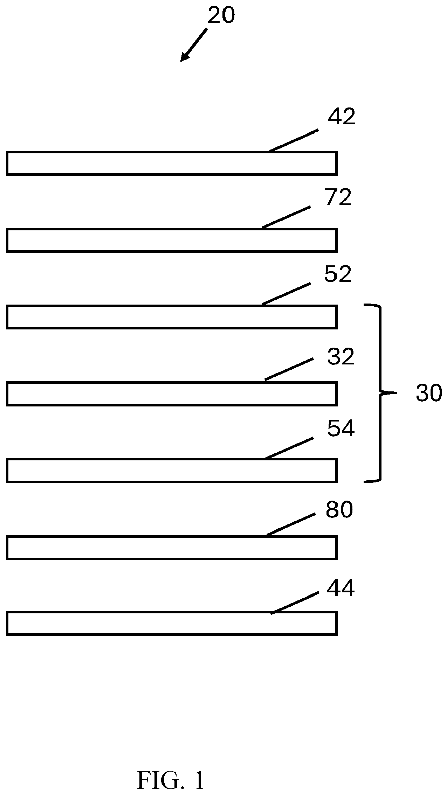

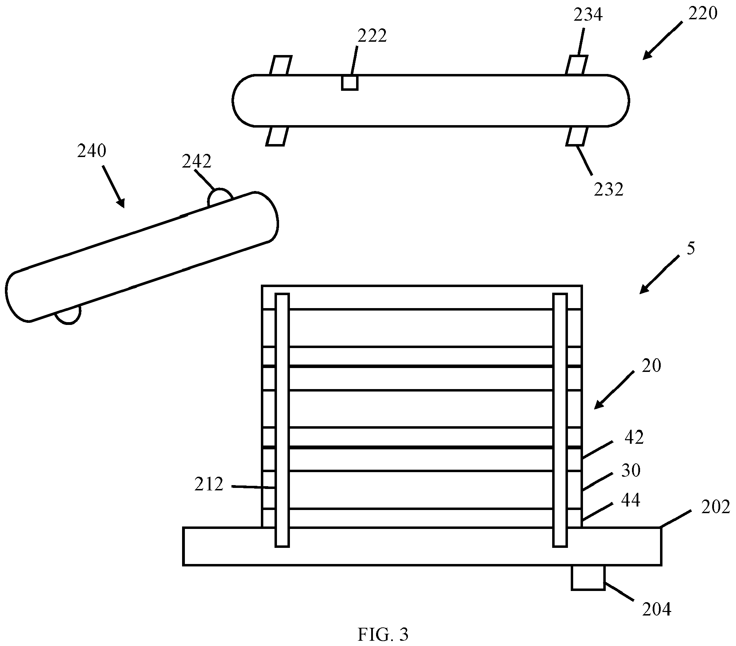

As illustrated in FIG. 1, an electrolyzer stack 5 (FIG. 3) may be made of multiple instances of an electrolyzer 20. The electrolyzer 20 may have a membrane electrode assembly 30. The membrane electrode assembly may be made primarily out of PFSAs. The membrane electrode assembly 30 may have a polymer electrolyte membrane 32 bounded by a cathode catalyst layer 52 and an anode catalyst layer 54. The cathode catalyst layer 52 may be made primarily out of precious metals (e.g., platinum) and carbon and PFSAs. The anode catalyst layer 54 may be made primarily out of precious metals (e.g., iridium and iridium oxides). The cathode catalyst layer 52 may be coupled to a gas diffusion layer 72. The gas diffusion layer 72 may be made primarily out of carbon and PTFEs. The anode catalyst layer 54 may be coupled to a porous transport layer 80. The porous transport layer 80 may be made primarily out of titanium and/or a precious metal (e.g., platinum). The gas diffusion layer 72 may be coupled to a first bipolar plate 42. The porous transport layer 80 may be coupled to a second bipolar plate 44. The first bipolar plate 42 and the second bipolar plate 44 may be made primarily out of a metal (e.g., steel), ceramic, and/or carbon.

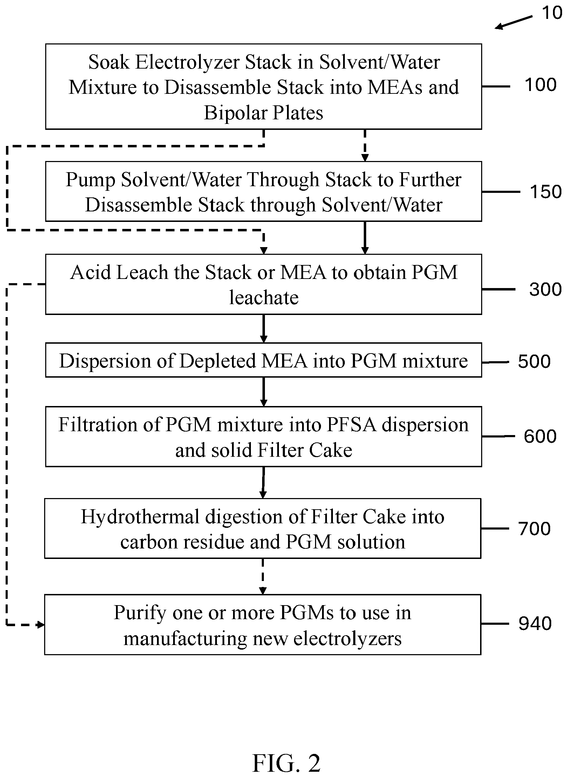

In one illustrative but non-limiting example of the present invention, a recycling process 10 for the electrolyzer stack 5 (FIG. 3) may be illustrated in FIG. 2. The electrolyzer 20, the plurality of electrolyzers 20, the electrolyzer stack 5 (FIG. 3), and/or a plurality of electrolyzer stacks (not illustrated) may be placed in a container with a solvent/water solution. This solvent/water solution may allow for the chemical separation or partial chemical separation of the membrane electrode assembly 30 of the electrolyzer 20 from the first bipolar plate 42 and/or the second bipolar plate 44 of the electrolyzer 20. While the electrolyzer 20 has been placed in the solvent/water solution, the membrane electrode assembly 30 and/or other parts of the electrolyzer 20 may increase in volume by absorbing the solvent/water solution. This volume change in the membrane electrode assembly 30 may loosen a bonding between the membrane electrode assembly 30 and the first bipolar plate 42 and/or the second bipolar plate 44. Additionally, the solvent/water solution may weaken the bond between the membrane electrode assembly 30 and the bipolar plates (e.g., the first bipolar plate 42 and/or the second bipolar plate 44) through other means. In one illustrative but non-limiting example, the solvent/water solution may be an ethanol/water or an alcohol/water solution. For example, the solvent/water solution may be 40% v/v ethanol/water. Though various temperatures may be used for the solvent/water solution, room temperature for the solvent/water solution may be used without any forced convection of the solvent/water solution. The electrolyzer 20 may be soaked in the solvent/water solution for various times. In some embodiments, the electrolyzer may be soaked from a range from about 1.5 hours to about 2.5 hours, including all ranges, subranges, and values therein, e.g., about 1.5 hours to about 1.7 hours, about 1.7 hours to about 1.9 hours, about 1.9 hours to about 2.1 hours, about 2.1 hours to about 2.3 hours, about 2.3 hours to about 2.5 hours, about 1.5 hours to about 2 hours, about 2 hours to about 2.5 hours, about 1.5 hours, about 1.6 hours, about 1.7 hours, about 1.8 hours, about 1.9 hours, about 2.0 hours, about 2.1 hours, about 2.2 hours, about 2.3 hours, about 2.4 hours, and about 2.5 hours. In some embodiments, the electrolyzer may be soaked for 2 hours. The solvent/water solution used in this process may be re-used for multiple soaking processes 100 for other electrolyzer 20 and/or electrolyzer stacks 5.

After the soaking process 100, the electrolyzer 20 may undergo further disassembly or further partial disassembly with the pumping process 150. Using a similar or the same solvent/water solution from the soaking process 100, the pumping process may place the electrolyzer 20, the plurality of electrolyzers 20, the electrolyzer stack 5, and/or the plurality of electrolyzer stacks 5 in a container with the solvent/water solution. The electrolyzer(s) 20 may be placed in a container such that the solvent/water solution may be pumped through the electrolyzer(s) 20 at various positions. For example, the solvent/water solution may be pumped through an internal conduit (not illustrated) of the electrolyzer(s) 20 and/or the electrolyzer stack(s) 5 such as the gas diffusion layer 72, the anode catalyst layer 54 inlet and/or outlet (not illustrated), the cathode catalyst layer 52 inlet and/or outlet (not illustrated), etc. The pumped solvent/water solution may assist in loosening the bond between the gas diffusion layer 72 and the first bipolar plate 42 and/or the second bipolar plates 44.

During operation of the electrolyzer 20, the first bipolar plate 42 and/or the second bipolar plate 44 may have become bonded to the membrane electrode assembly 30 due to various reasons such as accumulated particulates bonding various parts together. For example, the membrane electrode assembly 30 may become attached to a flow field (not illustrated) of the first bipolar plate 42 and/or the second bipolar plate 44. This increases the difficulty of separating the membrane electrode assembly 30 from the first bipolar plate 42 and/or the second bipolar plate 44 either manually, through vacuums, or other mechanical methods. Additionally, using these methods to remove these pieces may cause pieces of, for example, the gas diffusion layer 72, remaining on the first bipolar plate 42 which increases the difficulty of recycling these components and reduces the overall efficiency of the recycling process 10. After the soaking process 100 and/or the pumping process 150, the membrane electrode assembly 30 and the first bipolar plate 42 and/or the second bipolar plate 44 may be easily separated either manually or through the use of an automated assembly 200, for example, with a motorized arm (e.g., a blade 232 from FIG. 3) that lifts the bipolar plates (e.g., the first bipolar plate 42 and/or the second bipolar plate 44) and the membrane electrode assembly 30. A motorized arm (e.g., the blade 232 from FIG. 3) may be a part of a larger assembly that also sorts the membrane electrode assembly 30 and the bipolar plates (e.g., the first bipolar plate 42 and/or the second bipolar plate 44) into various parts for further recycling and/or other uses.

In one illustrative but non-limiting embodiment of the automated disassembly process 200 illustrated in FIG. 3, the electrolyzer stack 5 may have one or more of the bipolar plates (e.g., the first bipolar plate 42 and/or the second bipolar plate 44) removed. The electrolyzer stack 5 may then be fixed on a surface 202 (e.g., a horizontal benchtop). The electrolyzer stack 5 may be fixed to the surface through, for example, one or more positioning pins 212. The electrolyzer stack 5 may be fixed onto the surface 202 through other means. The surface 202 may be raised or lowered by a motor 204 (e.g., a step motor). Each step of the step motor or each programmed rotation of the motor 204 may match a thickness of the bipolar plate (e.g., the first bipolar plate 42 and/or the second bipolar plate 44), the membrane electrode assembly 30, and/or any other set distance in order to facilitate the disassembly process 200. Additionally, any other type of motor may be used along with a sensor coupled to an actuator in order to facilitate the disassembly process. The positioning pin 212 may be fixed. As illustrated in FIG. 3, a blade 232 on a conveyer 220 may remove one bipolar plate (e.g., the first bipolar plate 42 and/or the second bipolar plate 44) at a time, moving it (for example, towards the left as illustrated in FIG. 3), received by a lower conveyer 240, and transported to a plate collection device (not shown). Though conveyors (e.g., the conveyor 220 and the lower conveyor 240) are illustrated in FIG. 3, any other means of transporting the plates (e.g., the first bipolar plate 42 and/or the second bipolar plate 44) may be used.

After the bipolar plate (e.g., the first bipolar plate 42 and/or the second bipolar plate 44) may have been removed from the fuel cell stack 5 (not illustrated), a second blade 234 may then move the membrane electrode assembly 30. Any other type of device that may move the membrane electrode assembly 30 may be used. By synchronizing speeds of both conveyers (e.g., the convey 220 and the lower conveyor 240), a roller 242 on the lower conveyer 240 may meet the membrane electrode assembly 30 at an appropriate time to guide the membrane electrode assembly 30 to a collector (not illustrated). Though synchronization may be used other forms of coordination may be used in order to facilitate the recycling process 10. The automated assembly process 200 illustrated in FIG. 3 may require multiple sensors and well-designed synchronization, sizing, and positioning of the conveyers (e.g., the conveyor 220 and the lower conveyor 240). The automated assembly process 200 may process multiple stacks 5 simultaneously. The automated assembly process 200 may use the processes described above at different speeds for relatively higher or lower overall runtimes. Further, one or more steps of the automated disassembly process 200 illustrated in FIG. 3 may also be performed manually.

Additionally, electrolyzer stacks (e.g., multiple instances of stack 5 depicted in FIG. 3) not illustrated) may be made with different materials and such electrolyzer stacks may have reserved small gaps between plates (e.g., the first bipolar plate 42 and/or the second bipolar plate 44) from which a series of hinges with pins may be inserted into to open an electrolyzer stacks (e.g., stack 5). In this and other designs of such electrolyzer stacks, there may be multiple areas to place a series of hinges with pins or other methods in order to facilitate opening one more electrolyzer stack (e.g., instances of stack 5).

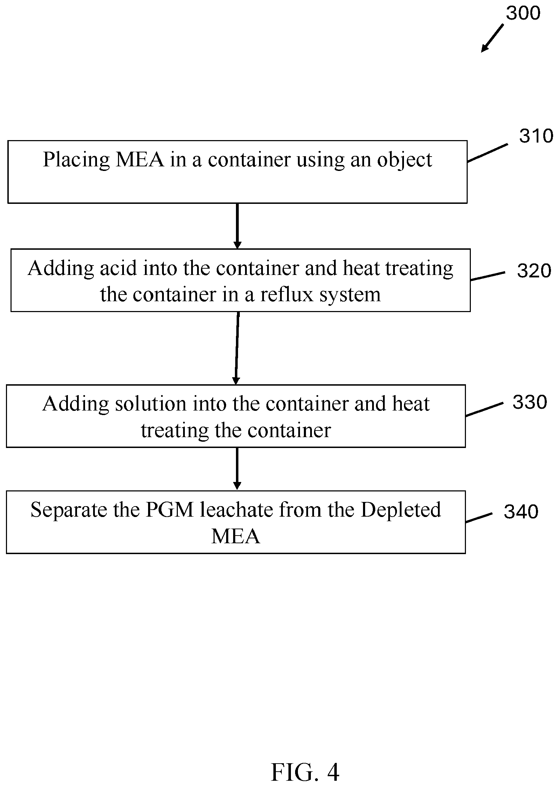

In a non-limiting illustrative example of the recycling process 10, after the membrane electrode assembly 30 and the bipolar plate (e.g., the first bipolar plate 42 and/or the second bipolar plate 44) of the electrolyzer 20 may have been separated, the membrane electrode assembly 20 may go through an acid leaching process 300. As illustrated in FIG. 4, as the membrane electrode assembly 30 may contain one or more precious metals, such as platinum and iridium, that may be useful for remanufacturing new electrolyzer 20 components such as new membrane electrode assemblies 30, the acid leaching process 300 may extract the precious metals from the membrane electrode assembly 30. The acid leaching process 300 may separate the membrane electrode assembly 30 into pieces or may be placed in their entirety in a container 302, for example, a round bottom flask. The membrane electrode assembly 30 may be placed at the bottom of the container using an object or multiple objects (e.g., glass beads) in step 310. Glass beads may be advantageous for their non-reactive properties, allowing them to place the membrane electrode assembly 30 at the bottom of the container without significantly influencing a chemical reaction. An acid (e.g., 20 mL of 1 M HNO₃) may then be added into the container in step 320. Then, the membrane electrode assembly 30 in the container may be heat-treated in a reflux system in step 320, for example, at 80 °C for 1 hour. Next, a solution (e.g., 100 mL of 2 M HCl and 3% (v/v) H₂O₂) may be added into the container, then heat treated in step 330. In some embodiments, heat-treating the membrane electrode assembly 30 in the container in a reflux system in step 330 occurs at a temperature of about 75 °C to about 85 °C, including all ranges, subranges, and values therein, e.g., about 75 °C to about 77 °C, about 77 °C to about 79 °C, about 79 °C to about 81 °C, about 81 °C to about 83 °C, about 83 °C to about 85 °C, about 75 °C to about 80 °C, about 80 °C to about 85 °C, about 75 °C, 76 °C, 77 °C, 78 °C, 79 °C, 80 °C, 81 °C, 82 °C, 83 °C, 84 °C, and 85 °C. In some embodiments, heat-treating the container in step 330 in a reflux system occurs at a temperature of about 75 °C to about 85 °C, including all ranges, subranges, and values therein, e.g., about 75 °C to about 77 °C, about 77 °C to about 79 °C, about 79 °C to about 81 °C, about 81 °C to about 83 °C, about 83 °C to about 85 °C, about 75 °C to about 80 °C, about 80 °C to about 85 °C, about 75 °C, 76 °C, 77 °C, 78 °C, 79 °C, 80 °C, 81 °C, 82 °C, 83 °C, 84 °C, and 85 °C. In some embodiments, heat-treating the membrane electrode assembly 30 in the container in step 330 in a reflux system occurs at 80 °C. The acid leaching process 300 may produce a precious metal leachate, for example, a platinum leachate. The acid leaching process 300 may convert the membrane electrode assembly 30 into a PGM depleted carbon polymer composite, or a depleted membrane electrode assembly. The depleted membrane electrode assembly may be used in further processes of the recycling process 10. The precious metal leachate may then be purified for use in manufacturing new electrolyzers 20. In an alternative embodiment of the acid leaching process 300, the fuel cell stack 5 (FIG. 3) may go through the steps noted above to produce the precious metal leachate. Though specific metals have been described in this process, any metal that may be used in the membrane electrode assembly 30 may be extracted. Additionally, although specific compounds, temperatures, and time, have been described, multiple compounds, temperatures, and time have been contemplated with the present invention.

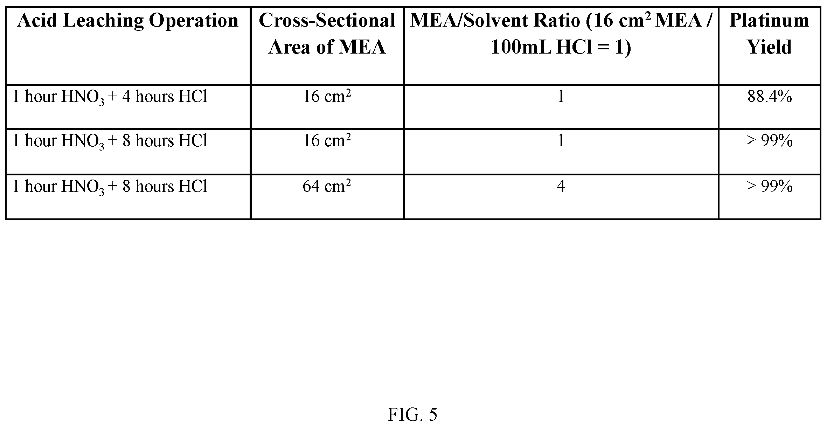

As illustrated in FIG. 5, multiple solutions and conditions may be used for the acid leaching process 300. Different solutions and conditions may be used to reach varying levels of precious metal recoveries. Though specific numbers are provided, the data from FIG. 5 may be extrapolated. The different solutions used for these tests include but are not limited to: HNO₃ + HCl

Returning to FIG. 1, the depleted membrane electrode assembly may then be used for the dispersion process 500. The dispersion process 500 may separate the PFSA from the precious metal (e.g., iridium) and the carbon. The depleted membrane electrode assembly may be placed in a container (e.g., a digestion vessel). A solution (e.g., a 1:1 ETOH/H₂O) may be placed in the container. The depleted membrane electrode assembly in the container may be heated where a hydrothermal reaction in step 510 takes place for a set amount of time. In some embodiments, the depleted membrane electrode assembly in the container may be heated at a temperature of about 200 °C to about 220 °C, including all ranges, subranges, and values therein, e.g., about 200 °C to about 204 °C, about 204 °C to about 208 °C, about 208 °C to about 212 °C, about 212 °C to about 216 °C, about 216 °C to about 220 °C, about 200 °C to about 210 °C, about 210 °C to about 220 °C, about 200 °C, 201 °C, 202 °C, 203 °C, and 204 °C, 205 °C, 206 °C, 207 °C, 208 °C, 209 °C, 210 °C, 210°C, 211 °C, 212 °C, 213 °C, 214 °C, 215 °C, 216 °C, 217 °C, 218 °C, 219 °C, and 220 °C. In some embodiments, the depleted membrane electrode assembly in the container is heated to about 210 °C. In some embodiments, the depleted membrane electrode assembly in the container is heated from a range between about 2.5 hours to about 3.5 hours, including all ranges, subranges, and values therein, e.g., about 2.5 hours to about 2.7 hours, about 2.7 hours to about 2.9 hours, about 2.9 hours to about 3.1 hours, about 3.1 hours to about 3.3 hours, about 3.3 hours to about 3.5 hours, about 2.5 hours to about 3 hours, about 3 hours to about 3.5 hours, about 2.5 hours, about 2.6 hours, about 2.7 hours, about 2.8 hours, about 2.9 hours, about 3.0 hours, about 3.1 hours, about 3.2 hours, about 3.3 hours, about 3.4 hours, and about 3.5 hours. In some embodiments, the container may be heated for 3 hours. This may allow for the PFSA dispersion, for example Nafion, to be obtained at a yield greater than 90%.

The resulting PFSA dispersion may go through a filtration process 600. During the filtration process 600, the PFSA dispersion may be put through a filter, for example, double filtered paper with a 2.5-µm pore size. The filtration process 600 may allow for a PFSA dispersion, for example Nafion, to be obtained at a yield greater than 90%. Additionally, the filtration process 600 may separate the PFSA dispersion from a solid dispersion that includes a precious metal (e.g., iridium) and carbon.

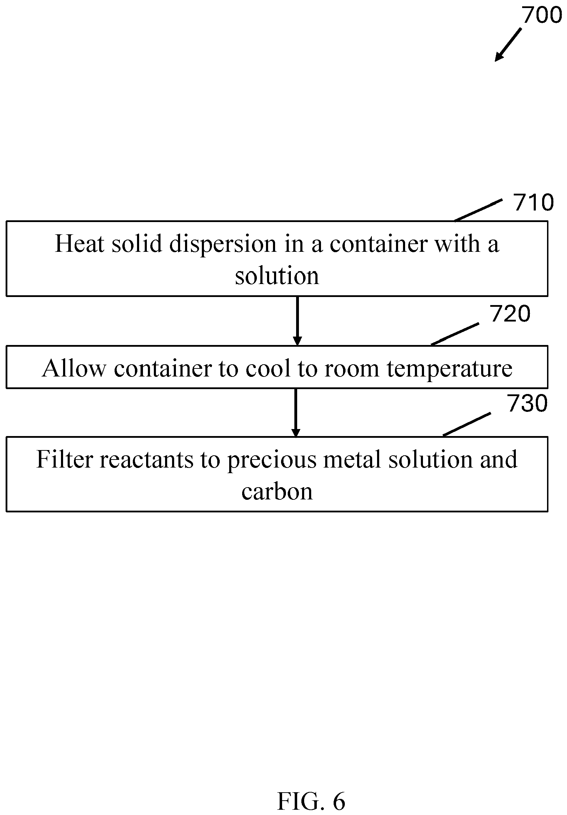

Referring to FIG. 6, the solid dispersion from the filtration process 600 may undergo a hydrothermal digestion process 700. The hydrothermal digestion process 700 may dissolve the precious metal (e.g., iridium) and isolate the carbon within the solid dispersion. The solid dispersion may be moved into a container (e.g., a digestion vessel). A solution may be added to the container, for example, 37% concentrated HCl with 3% v/v H₂O₂. The solid dispersion in the container may then be sealed and heated in step 710 (e.g., in an oven, microwave, etc.) to a temperature for a set time. In some embodiments, the solid dispersion in the container may be heated in step 710 at a temperature of about 210 °C to about 230 °C, including all ranges, subranges, and values therein, e.g., about 210 °C to about 214 °C, about 214 °C to about 218 °C, about 218 °C to about 222 °C, about 222 °C to about 226 °C, about 226 °C to about 230 °C, about 210 °C to about 220 °C, about 220 °C to about 230 °C, about 210 °C, 210 °C, 211 °C, 212 °C, 213 °C, 214 °C, 215 °C, 216 °C, 217 °C, 218 °C, 219 °C, 220 °C, 221 °C, 221 °C, 222 °C, 223 °C, 224 °C, 225 °C, 226 °C, 227 °C, 228 °C, 229 °C, and 230 °C. In some embodiments, the solid dispersion in the container in step 710 is heated to about 220 °C. In some embodiments, the solid dispersion in the container may be heated for a range from about 3.5 hours to about 4.5 hours, including all ranges, subranges, and values therein, e.g., about 3.5 hours to about 3.7 hours, about 3.7 hours to about 3.9 hours, about 3.9 hours to about 4.1 hours, about 4.1 hours to about 4.3 hours, about 4.3 hours to about 4.5 hours, about 3.5 hours to about 4 hours, about 4 hours to about 4.5 hours, about 3.5 hours, about 3.6 hours, about 3.7 hours, about 3.8 hours, about 3.9 hours, about 4.0 hours, about 4.1 hours, about 4.2 hours, about 4.3 hours, about 4.4 hours, and about 4.5 hours. In some embodiments, the container may be heated in step 710 for 4 hours. After the set time has passed, the solid dispersion in the container may be allowed to cool to room temperature in step 720. Then, a product (not illustrated) within the container may be filtered in step 730, for example, with double filtered paper with a 2.5-µm pore size. The process may result in the product (not illustrated) separated into a precious metal solution (e.g., an iridium solution) and leftover carbon. The hydrothermal digestion process 700 may reach 96% efficiency for precious metal dissolution (e.g., an iridium dissolution). The precious metal solution (e.g., an iridium solution) may then be purified for use in manufacturing a new electrolyzer(s) (e.g., electrolyzer 20).

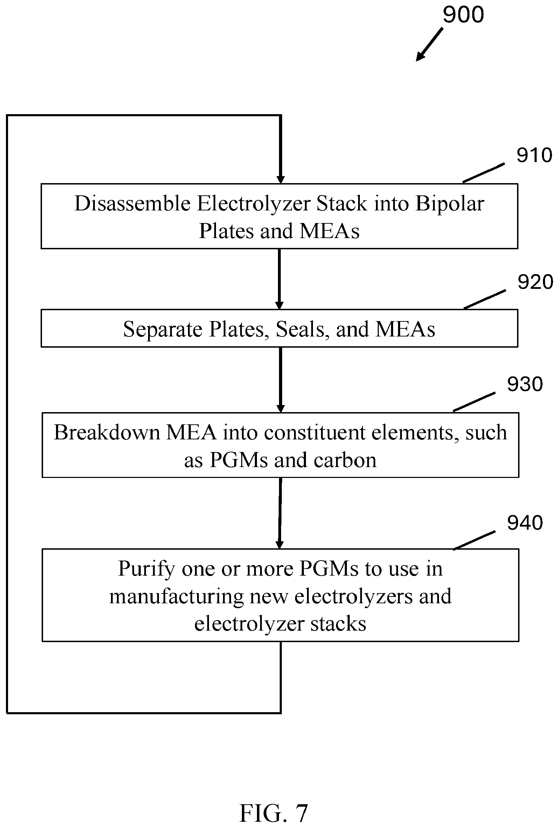

As illustrated in FIG. 7, the processes of the electrolyzer recycling process 10 depicted in FIG. 1, may form a closed loop recycling process 900 for electrolyzer(s) 20 and/or electrolyzer stack(s) 5. The processes illustrated above may add additional processes, omit processes, and reorder processes as needed. First, multiple membrane electrode assemblies 30 may be manufactured and/or assembled to create electrolyzers 20. The electrolyzers 20 may be connected, creating an electrolyzer stack 5. After an electrolyzer stack 5 may have been assembled, the electrolyzer stack 5 may have gone through an extended operation, reducing the stack's 5 efficiency. As the stack's 5 efficiency may have been reduced, the stack 5 may require recycling so that new membrane electrode assemblies 30 may be assembled. The recycling process 900 may begin by disassembling the electrolyzers 20 into bipolar plates (e.g., the first bipolar plate 42 and/or the second bipolar plate 44) and the membrane electrode assemblies 30 in a step 910. From there, the plates (e.g., the first bipolar plate 42 and/or the second bipolar plate 44), seals (not illustrated), and the membrane electrode assemblies 30 may further be separated in a step 920. The resulting membrane electrode assembly 30 may be disassembled into constituent parts in a step 930, such as carbon, precious metals (e.g., iridium, platinum), perfluorinated ionomers, and other parts. Each part may then be further purified in a step 940 so that the parts may be used to manufacture a new membrane electrode assembly 30, based on recycled components from a used membrane electrode assembly 30. Additional components may or may not be needed to manufacture a new membrane electrode assembly 30 from the recycled components of a spent membrane electrode assembly 30.

As may be recognized by those of ordinary skill in the art based on the teachings herein, numerous changes and modifications may be made to the above-described, and other embodiments of the present disclosure without departing from the scope of the disclosure. The components of the electrolyzer stack and membrane electrode assembly disassembly for component separation and recycling as disclosed in this application may be replaced by alternative component(s) or feature(s), such as those disclosed in another embodiment, which serve the same, equivalent or similar purpose as known by those skilled in the art to achieve the same, equivalent or similar results by such alternative component(s) or feature(s) to provide a similar function for the intended purpose. For example, any mention of a compound or solution used in the recycling process for electrolyzers should be construed as an example of the type of compound or solution used in that process. Other compounds of a similar chemical structure or similar effect may be used. Temperatures are mentioned for various reactions and these temperatures should be construed as one example of a wide range of temperatures that may be altered based on the amount of products going into the reaction and the desired outputs, the size of the container, the type of solution used, the desired efficiency, etc. Various times are discussed which should be construed as one example, but various times may also be used. In addition, the electrolyzer and fuel cell stack and membrane electrode assembly disassembly for component separation and recycling may include more or fewer components or features than the embodiments as described, illustrated, and attached herein. The present invention is intended to cover all past, present, and future versions and iterations of electrolyzers and are intended to work with all such embodiments. Accordingly, this detailed description of the currently preferred embodiments is to be taken in an illustrative, as opposed to limiting of the disclosure. Further, the electrolyzer recycling processes disclosed herein may be also applied to one or more portions of a fuel cell recycling process disclosed in the co-owned application referenced above and filed on the same day as the present application.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprise" (and any form of comprise, such as "comprises" and "comprising"), "have" (and any form of have, such as "has", and "having"), "include" (and any form of include, such as "includes" and "including"), and "contain" (and any form of contain, such as "contains" and "containing") are open-ended linking verbs. As a result, a method or device that "comprises," "has," "includes," or "contains" one or more processes or elements possesses those one or more processes or elements but is not limited to possessing only those one or more processes or elements. Likewise, a step of a method or an element of a device that "comprises," "has," "includes," or "contains" one or more features possesses those one or more features but is not limited to possessing only those one or more features. Furthermore, a device or structure that is configured in a certain way is configured in at least that way but may also be configured in ways that are not listed.

The disclosure has been described with reference to the preferred embodiments. It will be understood that the embodiments described herein are exemplary of a plurality of possible arrangements to provide the same general features, characteristics, and general system operation. Modifications and alterations will occur to others upon a reading and understanding of the preceding detailed description. It is intended that the disclosure be construed as including all such modifications and alterations.

## Claims

1. A method for use in recycling an electrolyzer stack, comprising:
inserting an electrolyzer comprising a first plate, a second plate, and a membrane electrode assembly therebetween, in a first solution to allow a loosening of a first bond between the first plate and the membrane electrode assembly and a second bond between the second plate and the membrane electrode assembly;
separating the membrane electrode assembly from the first plate and the second plate;
acid leaching the membrane electrode assembly to obtain a first precious metal; and
dispersing the membrane electrode assembly to obtain a second precious metal.

2. The method of claim 1, wherein the loosening comprises the membrane electrode assembly absorbing the first solution to increase a volume of the membrane electrode assembly.

3. The method of claim 1, wherein the separating the membrane electrode assembly from the first plate and the second plate occurs in response to inserting the fuel cell in the first solution.

4. The method of claim 1, wherein the separating the membrane electrode assembly from the first plate and the second plate comprises separating the first plate and the second plate from the membrane electrode assembly by a motorized arm lifting the first plate, the membrane electrode assembly, and/or the second plate.

5. The method of claim 1, further comprising pumping a second solution through an internal conduit of the electrolyzer stack to assist the loosening of the first bond and the second bond.

6. The method of claim 1, wherein the first precious metal is platinum and the second precious metal is iridium.

7. The method of claim 1, wherein the acid leaching further comprises:
acid leaching the membrane electrode assembly in a second solution to obtain a depleted membrane electrode assembly.

8. The method of claim 7, wherein the dispersing the membrane electrode assembly comprises:
dispersing the depleted membrane electrode assembly in a third solution to obtain a second precious metal mixture;
filtering the second precious metal mixture into a material; and
dispersing the material with a fourth solution to obtain a second precious metal solution.

9. The method of claim 7, wherein the acid leaching comprises:
inserting the membrane electrode assembly into a container with the first solution;
heat treating the container in a reflux system to a temperature of about 75 °C to about 85 °C for about 50 minutes to about 70 minutes;
inserting HCl and 3% v/v H₂O₂ into the container; and
heat treating the container to a temperature of about 75 °C to about 85 °C for about 7.5 hours to about 8.5 hours;
wherein the first solution is HNO₃.

10. The method of claim 8, wherein the first solution is 40% volume / volume ethanol / water at about room temperature without forced convection.

11. The method of claim 8, wherein the first solution and the second solution comprise a same solution.

12. The method of claim 8, wherein the dispersing the depleted membrane electrode assembly in a third solution comprises:
inserting the depleted membrane electrode assembly in a digestion vessel at a temperature of about 200 °C to about 220 °C for about 2.5 hours to about 3.5 hours;
wherein the third solution is 1:1 ethanol/water.

13. The method of claim 8, wherein the dispersing the material with the fourth solution to obtain a second precious metal solution comprises:
inserting the material into a container with the fourth solution to obtain a fifth solution, the fourth solution being 37% concentrated HCl with 3% v/v H₂O_{2;}
heating the fifth solution at a temperature of about 210 °C to about 230 °C for about 3.5 hours to about 4.5 hours;
cooling the fifth solution to about room temperature;
filtering the fifth solution to obtain the second precious metal solution.

14. The method of claim 12, wherein the filtering uses a double filtered paper with a 2.5-µm pore size.

15. A method for use in recycling an electrolyzer stack, comprising:
applying a solvent to a first plate, a second plate, and a membrane electrode assembly of an electrolyzer to cause the membrane electrode assembly to absorb the solvent to loosen a first bond between the first plate and the membrane electrode assembly and a second bond between the second plate and the membrane electrode assembly; and
separating the membrane electrode assembly from the first plate and the second plate.
